# EUROPÄISCHE PATENTSCHRIFT

(11) **EP 1 882 199 B1**
(45) Veröffentlichungstag und Bekanntmachung des Hinweises auf die Patenterteilung: **16.03.2011**
(21) Anmeldenummer: 06753693.8
(22) Anmeldetag: 17.05.2006
(51) Int. Cl.: G02B 1/04, G02C 7/10, B29D 11/00

(54) **VERFAHREN ZUR HERSTELLUNG EINES PHOTOCHROMEN KUNSTSTOFFGEGENSTANDS**
METHOD FOR PRODUCING A PHOTOCHROMIC PLASTIC ARTICLE
PROCEDE POUR REALISER UN OBJET PLASTIQUE PHOTOCHROMIQUE

(30) Priorität: 18.05.2005 DE 102005022860
(43) Veröffentlichungstag der Anmeldung: 30.01.2008
(73) Patentinhaber: Rodenstock GmbH, 80469 München (DE)
(72) Erfinder: ZINNER, Herbert, 85296 Rohrbach (DE); SCHUSTER, Herbert, 82275 Emmering (DE)
(74) Vertreter: Müller-Boré & Partner Patentanwälte
(86) Internationale Anmeldenummer: PCT/EP2006/004693
(87) Internationale Veröffentlichungsnummer: WO 2006/122795

(56) Entgegenhaltungen:
- WO-A-94/23928
- WO-A-95/15845
- WO-A-2004/074883
- US-A- 5 800 744

## Beschreibung

Die vorliegende Erfindung betrifft ein Verfahren zur Herstellung eines photochromen Kunststoffgegenstands und einen dadurch erhältlichen photochromen Kunststoffgegenstand mit einer photochromen Schicht in optischer Qualität, wobei dieses Verfahren sowohl für Polymersysteme mit einem niedrigen und mittleren Brechungsindex als auch für Polymersysteme mit einem hohen Brechungsindex geeignet ist.

Bislang werden zur Herstellung von photochromen Kunststoffgegenständen die folgenden Verfahren (1) bis (3) angewendet:

### (1) Massefärbung:

Die photochromen Verbindungen werden in ein Monomer eingebracht und dieses Gemisch wird durch thermische oder photochemische Polymerisation ausgehärtet (vgl. DE 43 25 154 C1 und US 2003/0158284 A1). Dieses Verfahren eignet sich jedoch nur für die Herstellung von Systemen aus Polymeren mit niedrigem bzw. mittlerem Brechungsindex.

### (2) Oberflächenfärbung:

Auf einen Gegenstand wird eine Lackschicht aufgebracht, welche photochrome Verbindungen in hoher Konzentration enthält. Bei Erwärmen des Gegenstands erfolgt ein Thermotransfer der photochromen Verbindungen von der Lackschicht in die Polymermatrix des Gegenstands. Anschließend wird der Lack wieder entfernt. Dieses Verfahren ist ebenfalls auf Systeme mit niedrigem bzw. mittlerem Brechungsindex beschränkt und erfordert eine spezielle Anpassung der Polymermatrix an das Diffusionsverhalten der photochromen Verbindungen.

### (3) Lackphotochromie:

Auf einen Gegenstand wird eine Lackschicht aufgebracht, welche die photochromen Verbindungen enthält. Dieses Verfahren eignet sich zwar auch für Polymersysteme mit hohem Brechungsindex, es ist jedoch aufwendig und nicht wirtschaftlich.

Die Druckschrift WO 94/23928 beschreibt ein Verfahren zur Herstellung eines photochromen Kunststoffgegenstands, bei dem photochrome Schichten separat hergestellt werden und nach entsprechendem Entformprozess auf ein Bulkmaterial aufgebracht werden.

Die der vorliegenden Erfindung zugrundeliegende Aufgabe besteht somit darin, ein einfaches, wirtschaftliches und serientaugliches Verfahren zur Herstellung eines photochromen Kunststoffgegenstands mit einer photochromen Schicht in optischer Qualität bereitzustellen, das nicht nur für Polymersysteme mit niedrigem oder mittlerem Brechungsindex, sondern auch für Polymersysteme mit hohem Brechungsindex geeignet sein soll.

Diese Aufgabe wird durch Bereitstellen der in den Ansprüchen gekennzeichneten Ausführungsformen gelöst.

Insbesondere wird gemäß der vorliegenden Erfindung ein Verfahren zur Herstellung eines photochromen Kunststoffgegenstands bereitgestellt, umfassend die Schritte:
(a) Aufbringen einer Schicht, umfassend zur Bildung eines Polymers geeignete Monomere in flüssiger Form und mindestens einen photochromen Farbstoff, auf zumindest einen Bereich der Innenoberfläche einer in einem Gießpaket angeordneten ersten Gießform und teilweises oder vollständiges Härten der Schicht unter Bildung einer photochromen Polymerschicht,
(b) gegebenenfalls Aufbringen einer Schutzschicht auf die vollständig oder teilweise gehärtete photochrome Polymerschicht und Härten der Schutzschicht,
(c) Einfüllen eines Gießharzes in das Gießpaket, welches die erste Gießform umfaßt, die zusammen mit einer zweiten Gießform in dem Gießpaket einen vorbestimmten Hohlraum bildet, und
(d) Härten des Gießharzes unter Bildung eines photochromen Kunststoffgegenstands.

Erfindungsgemäß wird somit die photochrome Schicht bereits bei bzw. im Rahmen der Herstellung solcher photochromer Kunststoffgegenstände, wie insbesondere Kunststoffgläser, eingebracht. Nach Entfernung der Gießformen haftet die photochrome Schicht auf dem ausgehärteten Gießharz. Mit dem erfindungsgemäßen Verfahren können in einfacher Art und Weise photochrome Schichten mit einer Schichtdicke von insbesondere auch über 30 µm in optischer Qualität vorgesehen werden, und zwar unabhängig vom Index des gewählten Linsen- bzw. Kunststoffmaterials.

Im Schritt (a) zur Bildung der photochromen Polymerschicht, d.h. der mindestens einen photochromen Farbstoff enthaltenden Schicht, wird üblicherweise ein flüssiges Gemisch, umfassend eine oder mehrere photochrome Verbindung(en), ein oder mehrere härtbare Monomere bzw. ein geeignetes Gemisch aus zwei oder mehreren miteinander härtbaren Komponenten bzw. Monomere und, wenn erforderlich, ein oder mehrere Photoinitiatoren oder ein oder mehrere Thermoinitiatoren, auf die Innenoberfläche einer Gießform als Teil eines Gießpaketes aufgebracht.

Die gemäß der vodiegenden Erfindung geeigneten härtbaren Materialien bzw. Monomere für die photochrome Polymerschicht unterliegen keiner besonderen Beschränkung und sind einem Fachmann bekannt. Üblicherweise werden solche zur Herstellung von gehärteten Kunststoffgegenständen geeignete Materialien eingesetzt, welches transparente Kunststoffgegenstände liefern. Vorzugsweise werden photochemisch härtbare oder thermisch härtbare Monomere, wie insbesondere Mono-, Di- oder Tri(meth)acrylatmonomere, entsprechende Thio(meth)acrylate oder Polyurethan-bildende Monomere, d.h. mindestens ein Di- oder Polyol und mindestens ein Di- oder Polyisocyanat, eingesetzt. Vorzugsweise werden Mono-, Di- oder Tri(meth)acrylatmonomere verwendet.

Im Rahmen der vorliegenden Erfindung werden unter (Meth)acrylaten sowohl die Acrylate als auch die Methacrylate verstanden.

Photochrome Substanzen sind einem Fachmann bekannt und umfassen beispielsweise Chromene, Fulgide, Fulgimide, Spirooxazine, Naphthopyrane oder Gemische davon. Geeignete photochrome Substanzen sind beispielsweise in US-A-5,399,687, US-A-5,498,686, US-A-5,623,005, US-A-5,645,768, US-A-5,707,557, US-A-5,801,243, US-A-5,932,725, US-A-5,952,515, US-A-5,990,305, US-A-6,022,496, US-A-6,036,890, US-A-6,102,543, US-A-6,146,554, US-A-6,171,525, US-A-6,190,580, US-A-6,225,466, US 2003/0158284 A1 und DE 43 25 154 C1 beschrieben.

Im Rahmen der vorliegenden Erfindung geeignete Photoinitiatoren sind einem Fachmann bekannt und weisen vorzugsweise eine Absorption bei > 400 nm auf. Geeignete Photoinitiatoren sind beispielsweise Benzophenon, 2,2-Dimethoxy-2-phenyl-acetophenon, 1-Hydroxycyclohexylphenylketon, 2-Methyl-1-[4-(methylthio)phenyl]-2-morpholinopropan-1-on, 2-Hydroxy-2-methyl-1-phenylpropan-1-on, Bis(2,6-dimethoxybenzoyl)-2,4,4-trimethylpentylphosphinoxid, 2,4,6-Trimethylbenzoyldi-phenylphosphinoxid, Bis(2,4,6-trimethylbenzoyl)pheny-1-phosphinoxid und Gemische davon.

In der vorliegenden Erfindung geeignete Thermoinitiatoren sind einem Fachmann bekannt und unterliegen keiner besonderen Beschränkung. Geeignete Thermoinitiatoren sind beispielsweise t-Amylperoxy-2-ethylhexanoat, t-Butylperoxy-2-ethylhexanoat, t-Butylperoxy-2-methylbenzoat, 1,1-Di-(t-butylperoxy)-3,3,5-trimethylcyclohexan, t-Butylperoxy-3,5,5-trimethylhexanoat, t-Butylperoxy-2-ethylhexylcarbonat, Dibenzoylperoxid, t-Amylperoxybenzoat, 2,2'-Azobis(2,4-dimethylpentannitril), 2,2'-Azobis(2-methylpropannitril), 2,2'-Azobis(2-methylbutannitril), 1,1'-Azobis(cyclohexancarbonitril) und Gemische davon.

Vorzugsweise werden im Rahmen der vorliegenden Erfindung für die Ausbildung der photochromen Polymerschicht ein oder mehrere Photoinitiatoren, wie vorstehend beispielhaft beschrieben, eingesetzt.

Die Dicke der teilweise oder vollständig gehärteten photochromen Polymerschicht unterliegt keiner besonderen Beschränkung, sie liegt jedoch vorzugsweise in einem Bereich von etwa 20 µm bis etwa 200 µm.

Die Schutzschicht(en) ist/sind aus üblichen, einem Fachmann bekannten Materialien aufgebaut. Die Schutzschicht(en) kann/können aus den gleichen Materialien wie die photochrome Polymerschicht aufgebaut sein, wobei dann jedoch keine photochrome Substanz darin vorgesehen ist. Photochemisch härtbare oder thermisch härtbare Monomere sind für die Schutzschicht(en) bevorzugt und Mono-, Di- oder Tri(meth)acrylatmonomere oder Gemische davon sind besonders bevorzugt. Die Schutzschicht kann, wenn gewünscht, auch einen oder mehrere Photoinitiator(en) oder einen oder mehrere Thermoinitiator(en) aufweisen.

Die Dicke der teilweise oder vollständig gehärteten Schutzschicht unterliegt keiner besonderen Beschränkung, sie liegt jedoch vorzugsweise in einem Bereich von etwa 0,1 µm bis etwa 10 µm.

Die in der vorliegenden Anmeldung beschriebenen Schutzschicht(en) wird/werden insbesondere dann vorgesehen, wenn eine Unverträglichkeit zwischen einem Bestandteil der photochromen Polymerschicht und dem Gießharz besteht. Eine derartige Unverträglichkeit besteht beispielsweise zwischen einer in der photochromen Schicht vorhandenen photochromen Substanz und einem schwefelhaltigen Monomer des Gießharzes. Grundsätzlich ist es jedoch auch denkbar selbst bei Verwendung eines schwefelhaltigen Materials als Gießharz keine Schutzschicht vorzusehen, wenn die photochrome Schicht vor Einfüllen eines schwefelhaltigen Gießharzes ausreichend gehärtet wurde.

Das in der vorliegenden Erfindung geeignete Gießharz unterliegt keiner besonderen Beschränkung. Es können übliche, für die Herstellung von Kunststoffgegenständen, insbesondere Kunststoffbrillenglaslinsen, geeignete Materialien verwendet werden. Die in der vorliegenden Erfindung geeigneterweise eingesetzten Gießharzmaterialien zur Bildung des photochromen Kunststoffgegenstands zeigen üblicherweise nach Härtung als Bulk eine Wasseraufnahme von höchstens 1% (gemessen bei 8 Stunden Lagerzeit bei 40°C), eine Kugeldruckhärte von mindestens 90 N/mm² (gemessen nach ISO 2039-1), ein Elastizitätsmodul von mindestens 2000 N/mm² (gemessen nach EN ISO 178) und eine mechanische Festigkeit von > 6 kJ/m² (gemessen durch den Schlagbiegeversuch nach Charpy nach ISO 179/1 flU).

Im Rahmen der vorliegenden Erfindung ist es jedoch bevorzugt, ein photochemisch härtbares oder thermisch härtbares Monomer, wie ein Mono-, Di- oder Tri(meth)acrylatmonomer, Polyalkylenglycolbisallylcarbonate, wie Diethylenglycolbisallylcarbonat, ein Gemisch aus mindestens einem Di- oder Polythiol und mindestens einem Di- oder Polyisocyanat, um ein Polythiourethan zu bilden (vgl. EP 0 780 413 A1), wie MR6, MR7, MR8 und MR20 (vertrieben von Mitsui Chemical Corporation), ein Gemisch aus mindestens einem Di- oder Polyol und mindestens einem Di- oder Polyisocyanat, um ein Polyurethan zu bilden, oder ein Gemisch aus einem Bis-episulfid und einer Verbindung mit mindestens einem aktiven Wasserstoffatom, um ein Polyepisulfid zu bilden (vgl. EP 0 921 417 A2), wie IU-20 (vertrieben von Mitsubishi Gas Chemicals), zu verwenden. Zu dem Gießharz können, wenn erforderlich, auch ein oder mehrere Photoinitiator(en) oder ein oder mehrere Thermoinitiator(en) oder Additive, wie Lichtstabilisierungsmittel, Trennmittel und/oder Verarbeitungshilfsstoffe, in einer geeigneten Menge gegeben werden.

Die photochrome Polymerschicht, die auf zumindest einen Bereich, üblicherweise auf die gesamte Fläche, der Innenoberfläche einer Gießform (d.h. der dem herzustellenden photochromen Kunststoffgegenstand zugewandten Seite der Gießform) aufgebracht wird, kann einen wesentlichen Bereich des resultierenden photochromen Kunststoffgegenstands, die gesamte Oberfläche des photochromen Kunststoffgegenstands oder beispielsweise eine Seite oder zwei Seiten des herzustellenden photochromen Kunststoffgegenstands, insbesondere eine Seite einer photochromen Brillenglaslinse, bedecken. Eine photochrome Brillenglaslinse weist die photochrome Schicht vorzugsweise auf der dem Brillenträger abgewandten Seite der Linse auf.

Die auf zumindest einen Bereich der Innenoberfläche einer Gießform aufgebrachte photochrome Polymerschicht wird teilweise (beispielsweise bis zum Gelpunkt) oder vollständig gehärtet, wobei eine photochemische Härtung, beispielsweise durch UV-Strahlung, oder eine thermische Härtung bevorzugt ist. Es kann bevorzugt sein, die photochrome Polymerschicht bzw. dessen Material nur teilweise, beispielsweise bis zum Gelpunkt, zu härten, insofern dadurch eine verbesserte Haftung zwischen der photochromen Polymerschicht und der daran angrenzenden Schicht erreicht werden kann.

Der Schritt (d), das Härten des Gießharzes, kann gegebenenfalls auch ein vollständiges Aushärten der zuvor aufgebrachten photochromen Polymerschicht, sofern diese in Schritt (a) nur teilweise, d.h. unvollständig gehärtet wurde, mit umfassen.

Unter einem in dem erfindungsgemäßen Verfahren verwendeten Gießpaket wird eine Anordnung verstanden, welche eine oder mehrere, üblicherweise zwei Gießformen bzw. Formschalen (d.h. bestimmte Teile des Gießpakets, die eine definierte räumliche Form vorgeben) und einen diese Gießformen zusammenhaltenden Dichtring umfaßt, so daß ein vorbestimmter Hohlraum gebildet wird. Der Dichtring hält die zwei Formschalen bzw. Gießformen zusammen und stellt den genauen Zwischenraum her, der dann flüssiges Monomer aufnimmt. Das Gießpaket ist derart ausgestaltet, daß es das flüssige Gießharzmaterial, welches nachfolgend das Bulkmaterial für den herzustellenden photochromen Kunststoffgegenstand darstellt, aufnehmen kann und nach Härtung des Gießharzes den photochromen Kunststoffgegenstand bildet. Der Hohlraum, welcher in dem Gießpaket definiert wird, unterliegt keiner wesentlichen Beschränkung. Es ist jedoch bevorzugt, den Hohlraum des Gießpakets in Form einer Linse, vorzugsweise einer Brillenglaslinse, auszubilden. Es ist jedoch auch möglich, andere geometrische Formen zu bilden, die für photochrome Anwendungen geeignet sein können.

Im Rahmen der Erzeugung photochromer Kunststoffgegenstände wie insbesondere photochromer Linsen kann auch eine weichere photochrome Polymerschicht vorgesehen werden, um ein schnelleres Ansprechverhalten bzw. eine raschere Farbänderung der photochromen Substanz(en) zu ermöglichen. Verwendet man derzeit verfügbare photochrome Verbindungen und brillentaugliche Basismaterialien, sind keine Aufhellgeschwindigkeiten erreichbar, die für schnelle Lichtintensitätsänderungen geeignet sind. Als Meßgröße eignen sich dazu meßtechnisch bestimmte Größen wie Δτ₂ₘᵢₙ (d.h. Transmission nach 2 Minuten Aufhellung - Transmission nach 15 min Belichtung), Δτ₁₀ₘᵢₙ (d.h. Transmission nach 10 Minuten Aufhellung - Transmission nach 15 min Belichtung) oder t_{1/2}, d.h. die Halbwertszeit des photochromen Hubs in der Aufhellphase. Die Eignung von Kunststoff- bzw. Gießharzmaterialien für die Anwendung in optischen Linsen ist durch meßtechnische Größen wie eine Wasseraufnahme von höchstens 1 % (gemessen bei 8 Stunden Lagerzeit bei 40°C), eine Kugeldruckhärte von mindestens 90 N/mm², ein Elastizitätsmodul von mindestens 2000 N/mm² und eine mechanische Festigkeit von > 6 kJ/m² begrenzt. Kunststoffmaterialien, welche ein extrem schnelles Aufhellverhalten, gewährleisten würden, genügen aber nicht den vorstehenden Gebrauchseigenschaften. Insofern wurden im Rahmen der Anordnung sogenannter "schneller" Photochromieschichten bislang Laminatsysteme entwikkelt, bei denen eine kunststoffuntaugliche photochrome Matrix beispielsweise in zwei Polycarbonatplatten eingebettet und dadurch vom Kunststoffmaterial isoliert wird. Ein Nachteil einer solchen Vorgehensweise ist das überaus aufwendige Verfahren zum Einbringen des Laminats in die nicht planen Formen zur Herstellung solcher Kunststofflinsen. Insofern ist es derzeit weiter notwendig, "schnelle" Photochromieschichten in einer separaten Schicht im Bulk einzubringen.

Vor diesem Hintergrund kann es im Rahmen des erfindungsgemäßen Verfahrens zur Herstellung eines photochromen Kunststoffgegenstands daher bevorzugt sein, insbesondere dann, wenn weiche Kunststoffmaterialien für die photochrome Matrix bzw. Schicht vorgesehen werden sollen, vor dem Schritt des Aufbringens einer photochromen Polymerschicht auf die Innenoberfläche der Gießform (d.h. vor Schritt (a) wie vorstehend ausgeführt) eine Schicht aus einem ersten Gießharz auf zumindest einen Bereich der Innenoberfläche der ersten Gießform aufzubringen, die vollständig oder teilweise gehärtet wird, wobei zwischen dieser ersten Gießharzschicht und der photochromen Schicht gegebenenfalls eine weitere Schutzschicht vorgesehen werden kann.

Folglich wird gemäß der vorliegenden Erfindung auch ein Verfahren zur Herstellung eines photochromen Kunststoffgegenstands bereitgestellt, umfassend die Schritte:
- Aufbringen einer Schicht aus einem ersten Gießharz auf zumindest einen Bereich der Innenoberfläche einer in einem Gießpaket angeordneten ersten Gießform, vollständiges oder teilweises Härten der ersten Gießharzschicht und gegebenenfalls Vorsehen und Härten einer Schutzschicht auf der vollständig oder teilweise gehärteten ersten Gießharzschicht,
- Aufbringen einer Schicht, umfassend zur Bildung eines Polymers geeignete Monomere in flüssiger Form und mindestens einen photochromen Farbstoff, auf die vollständig oder teilweise gehärtete erste Gießharzschicht oder die Schutzschicht und teilweises oder vollständiges Härten der Schicht unter Bildung einer photochromen Polymerschicht,
- gegebenenfalls Aufbringen einer weiteren Schutzschicht auf die vollständig oder teilweise gehärtete photochrome Polymerschicht und Härten der Schutzschicht,
- Einfüllen eines zweiten Gießharzes in das Gießpaket, welches die erste Gießform umfaßt, die zusammen mit einer zweiten Gießform in dem Gießpaket einen vorbestimmten Hohlraum bildet, und
- Härten des zweiten Gießharzes unter Bildung eines photochromen Kunststoffgegenstands.

Es wird somit gemäß diesem Verfahren der Schritt, erst die "schnelle" photochrome Schicht in ein Laminat einzubetten und dieses im Bulk einzupolymerisieren, dadurch umgangen, daß die entsprechenden Schichten während des Prozesses der Herstellung des photochromen Kunststoffgegenstands bzw. des Kunststoffglasherstellprozesses erzeugt werden.

Gemäß dieser Ausführungsform, d.h. wenn ein weiches Kunststoffmaterial für die photochrome Matrix bzw. Polymerschicht vorgesehen wird, wird dessen Material derart gewählt, daß deren Kugeldruckhärte üblicherweise < 80 N/mm², vorzugsweise 20 - 60 N/mm², gemessen nach vollständiger Härtung, beträgt. Das heißt, die Kugeldruckhärte einer solchen "weichen" Polymerschicht, für sich genommen nach entsprechender Härtung, beträgt üblicherweise < 80 N/mm². Das Elastizitätsmodul einer solchen vollständig gehärteten photochromen Schicht beträgt üblicherweise < 1500 N/mm², vorzugsweise 500 - 1200 N/mm². Für eine derart "weiche" photochrome Polymerschicht kommen wiederum insbesondere Mono-, Di- oder Tri(meth)acrylatmonomere in Frage. Das Einstellen der vorstehenden Parameter liegt im handwerklichen Ermessen eines Fachmanns und kann beispielsweise über die Kettenlänge der resultierenden Polymere, entsprechende Funktionalitäten in den Spacereinheiten, Zugabe von Additiven wie insbesondere Weichmacher, etc., erreicht werden.

Die Schicht aus einem ersten Gießharz unterliegt wiederum keiner wesentlichen Beschränkung. Geeignete Materialien für die erste Gießharzschicht sind die vorstehend für das Gießharz beschriebenen Materialien. Das die erste Gießharzschicht bildende Gießharz ist vorzugsweise aus dem gleichen Material wie das zweite Gießharz aufgebaut. Es ist jedoch auch möglich, unterschiedliche Materialien für das zweite Gießharz und die erste Gießharzschicht zu verwenden. Die Dicke der ersten Gießharzschicht unterliegt keiner besonderen Beschränkung, sie liegt jedoch vorzugsweise in einem Bereich von etwa 20 µm bis etwa 500 µm.

Das Härten der ersten Gießharzschicht bzw. der Schutzschicht(en) erfolgt durch übliche, auf dem Fachgebiet bekannte Verfahren, wobei eine photochemische Härtung, beispielsweise durch UV-Strahlung, und/oder eine thermische Härtung bevorzugt ist/sind. Vorzugsweise wird die erste Gießharzschicht bzw. die Schutzschicht unmittelbar nach dem Aufbringen teilweise oder vollständig gehärtet.

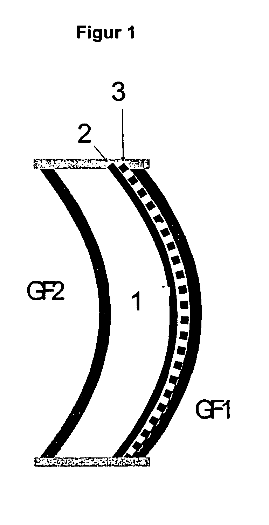

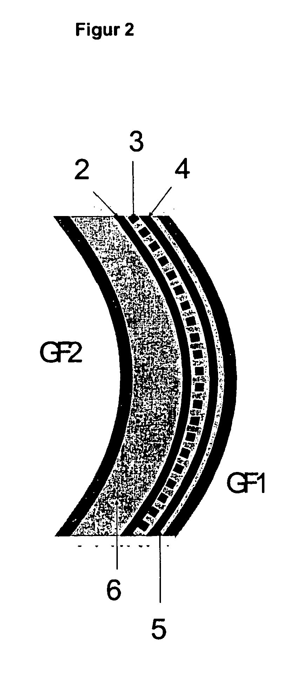

Die Innenform des Gießpakets unterliegt keiner besonderen Beschränkung. Das Gießpaket kann ein-, zwei-, drei- oder mehrteilig aufgebaut sein. Die Innenform des Gießpakets hängt von der gewünschten Form des herzustellenden photochromen Kunststoffgegenstands ab. Vorzugsweise ist das Gießpaket derart gestaltet, daß der darin vorgesehene Hohlraum die Form einer Brillenglaslinse bildet (vgl. die Figuren 1 und 2), wobei üblicherweise konvexe und konkave Gießformen bzw. Formschalen mittels eines entsprechenden Dichtrings in dem Gießpaket angeordnet werden. Gemäß einer besonders bevorzugten Ausführungsform umfaßt das Gießpaket für eine Brillenglaslinse zwei Gießformen, wobei die erste Gießform (GF1) eine konvexe Form und die zweite Gießform eine konkave Form (GF2) aufweisen (vgl. die Figuren 1 und 2).

Das Aufbringen der photochromen Schicht, der Schutzschicht(en) bzw. der ersten Gießharzschicht erfolgt durch übliche, einem Fachmann bekannte Verfahren, beispielsweise durch Spincoating, Spraycoating oder Dipcoating.

Das Härten des Gießharzes zur Bildung eines photochromen Kunststoffgegenstands erfolgt durch übliche, auf dem Fachgebiet bekannte Verfahren, wobei eine photochemische Härtung, vorzugsweise durch UV-Strahlung, und/oder eine thermische Härtung bevorzugt ist/sind. Vorzugsweise wird das Gießharz (als Bulkmaterial des herzustellenden photochromen Kunststoffgegenstands) vollständig gehärtet.

Das Bulkmaterial für den gehärteten photochromen Kunststoffgegenstand (d.h. das gehärtete (zweite) Gießharz) ist vorzugsweise ein Polythiourethan, ein Polyurethan, ein Polyepisulfid, ein Poly(meth)acrylat oder ein Polyalkylenglycolbisallylcarbonat oder ein Gemisch aus zwei oder mehreren dieser Materialien. Es ist jedoch auch möglich, beispielsweise ein Polycarbonat einzusetzen. Als besonders bevorzugte Bulkmaterialien bzw. Materialien für die erste Gießharzschicht seien exemplarisch CR39, MR6, MR7, MR8, MR10, IU20 und CR 407 (vertrieben von PPG Industries) genannt.

Darüber hinaus wird gemäß der vorliegenden Erfindung ein photochromer Kunststoffgegenstand bereitgestellt, der nach dem erfindungsgemäßen Verfahren erhältlich ist. Der erfindungsgemäße photochrome Kunststoffgegenstand zeichnet sich durch eine darauf aufgebrachte photochrome Schicht in optischer Qualität insbesondere auch bei Schichtdicken über 20 µm aus und eignet sich sowohl für Polymersysteme mit einem niedrigen oder mittleren Brechungsindex (z.B. Acrylat oder Methacrylat als Bulkmaterial), als auch für Systeme mit einem hohen Brechungsindex (z.B. Polythiourethane als Bulkmaterial).

Die gemäß der vorliegenden Erfindung herstellbaren photochromen Kunststoffgegenstände unterliegen keiner wesentlichen Beschränkung hinsichtlich der Form und es lassen sich photochrome Kunststoffgegenstände in unterschiedlichsten Formen herstellen. Gemäß einer besonders bevorzugten Ausführungsform ist der photochrome Kunststoffgegenstand eine photochrome Kunststofflinse für ein Brillenglas oder für eine andere optische Anwendung.

Insbesondere dann, wenn eine photochrome Kunststofflinse für ein Brillenglas hergestellt wird, ist es vorteilhaft, wenn das Gießpaket zwei Gießformen GF1 und GF2 von konvexer bzw. konkaver Gestalt umfaßt, wie in den Figuren 1 und 2 gezeigt.
Figur 1 zeigt ein Gießpaket mit einem von den zwei Gießformen begrenzten Hohlraum, umfassend eine erste (konvexe) Gießform (GF1) und eine zweite (konkave) Gießform (GF2), wobei eine photochrome Schicht (3) auf die Innenoberfläche der ersten Gießform (GF1) aufgebracht ist, und ein Gießharz (1) in das Gießpaket eingefüllt ist. Ferner ist eine optionale Schutzschicht (2) gezeigt, die auf die zu dem Gießharz (1) weisende Seite der photochromen Schicht (3) aufgebracht werden kann.
Figur 2 zeigt ein Gießpaket, umfassend eine erste (konvexe) Gießform (GF1) und eine zweite (konkave) Gießform (GF2), wobei eine erste Gießharzschicht (5) auf die Innenoberfläche der ersten Gießform (GF1) und eine photochrome Polymerschicht (3) auf die erste Gießharzschicht (5) aufgebracht ist. Das Gießpaket ist mit einem zweiten Gießharz (6) gefüllt. Ferner sind die optionalen Schutzschichten (2) und (4) gezeigt, welche die photochrome Polymerschicht (3) einschließen bzw. schützen.

## Patentansprüche

1. Verfahren zur Herstellung eines photochromen Kunststoffgegenstands, umfassend die Schritte, umfassend die Schritte:
- Aufbringen einer Schicht aus einem ersten Gießharz auf zumindest einen Bereich der Innenoberfläche einer in einem Gießpaket angeordneten ersten Gießform, vollständiges oder teilweises Härten der ersten Gießharzschicht und gegebenenfalls Vorsehen und Härten einer Schutzschicht auf der vollständig oder teilweise gehärteten ersten Gießharzschicht,
- Aufbringen einer Schicht, umfassend zur Bildung eines Polymers geeignete Monomere in flüssiger Form und mindestens einen photochromen Farbstoff, auf die vollständig oder teilweise gehärtete erste Gießharzschicht oder die Schutzschicht und teilweises oder vollständiges Härten der Schicht unter Bildung einer photochromen Polymerschicht,
- gegebenenfalls Aufbringen einer weiteren Schutzschicht auf die vollständig oder teilweise gehärtete photochrome Polymerschicht und Härten der Schutzschicht,
- Einfüllen eines zweiten Gießharzes in das Gießpaket, welches die erste Gießform umfaßt, die zusammen mit einer zweiten Gießform in dem Gießpaket einen vorbestimmten Hohlraum bildet, und
- Härten des zweiten Gießharzes unter Bildung eines photochromen Kunststoffgegenstands.

2. Verfahren nach Anspruch 1, wobei ein weiches Kunststoffmaterial für die photochrome Polymerschicht vorgesehen wird, so daß deren Kugeldruckhärte, gemessen nach vollständiger Härtung, < 80 N/mm², vorzugsweise 20-60 N/mm², bzw. deren Elastizitätsmodul < 1500 N/mm², vorzugsweise 500-1200 N/mm², beträgt.

3. Verfahren nach Anspruch 2, wobei das weiche Kunststoffmaterial für die photochrome Polymerschicht auf Basis von Mono-, Di- oder Tri(meth)acrylatmonomeren ist.

4. Photochromer Kunststoffgegenstand, erhältlich nach dem Verfahren gemäß einem der Ansprüche 1 bis 3.

## Claims

1. Method for producing a photochromic plastic article, comprising the steps:
• application of a layer composed of a first casting resin to at least one region of the inside surface of a first casting mould arranged in a casting package, complete or partial hardening of the first casting resin layer and, if necessary, provision and hardening of a protective layer on the completely or partially hardened first casting resin layer,
• application of a layer, composed of monomers in liquid form suitable for forming a polymer and at least one photochromic dye, to the completely or partially hardened first casting resin layer or the protective layer and partial or complete hardening of the layer to form a photochromic polymer layer,
• if necessary, application of a further protective layer onto the completely or partially hardened photochromic polymer layer and hardening of the protective layer,
• feeding a second casting resin into the casting package, which comprises the first casting mould, which together with a second casting mould forms a predetermined cavity in the casting package, and
• hardening of the second casting resin to form a photochromic plastic article.

2. Method according to claim 1, wherein a soft plastic material is provided for the photochromic polymer layer, so that its Brinell hardness measured after complete hardening amounts to < 80 N/mm², preferably 20-60 N/mm², or its modulus of elasticity amounts to < 1500 N/mm², preferably 500-1200 N/mm².

3. Method according to claim 2, wherein the soft plastic material for the photochromic polymer layer is based on mono-, di- or tri(meth)acrylate monomers.

4. Photochromic plastic article obtainable using the method according to one of claims 1 to 3.

## Revendications

1. Procédé de préparation d'un objet plastique photochromique, comprenant les étapes consistant à _{:}
- appliquer une couche d'une première résine de coulée sur au moins une zone de la surface interne d'un premier moule agencé dans un ensemble de coulée, faire durcir complètement ou partiellement la première couche de résine de coulée et le cas échéant, prévoir et faire durcir une couche protectrice sur la première couche complètement ou partiellement durcie de résine de coulée,
- appliquer une couche comprenant des monomères appropriés pour la formation d'un polymère, sous forme liquide et au moins un colorant photochromique, sur la première couche complètement ou partiellement durcie de résine de coulée ou la couche protectrice, et faire durcir complètement ou partiellement la couche avec formation d'une couche polymère photochromique,
- le cas échéant, appliquer une autre couche protectrice sur la couche polymère photochromique complètement ou partiellement durcie, et faire durcir la couche protectrice,
- verser une deuxième résine de coulée dans l'ensemble de coulée, qui comprend le premier moule, qui forme avec un deuxième moule dans l'ensemble de coulée, un espace creux prédéfini, et
- faire durcir la deuxième résine de coulée avec formation d'un objet plastique photochromique.

2. Procédé selon la revendication 1, où un matériau plastique souple est prévu pour la couche polymère photochromique, de sorte que sa dureté à la pénétration de bille, mesurée après durcissement complet, se situe à < 80 N /mm², de préférence dans l'intervalle allant de 20 à 60 N/mm², et son module d'élasticité se situe à < 1500 N/mm², de préférence dans l'intervalle allant de 500 à 1200 N/mm².

3. Procédé selon la revendication 2, où le matériau plastique souple pour la couche polymère photochromique est à base de monomères mono-, di- ou tri(méth)acrylate.

4. Objet plastique photochromique, pouvant être obtenu par le procédé suivant l'une des revendications 1 à 3.
